# EUROPÄISCHE PATENTSCHRIFT

(11) **EP 2 853 452 B1**
(45) Veröffentlichungstag und Bekanntmachung des Hinweises auf die Patenterteilung: **10.04.2019**
(21) Anmeldenummer: 14002418.3
(22) Anmeldetag: 14.07.2014
(51) Int. Cl.: B60T 8/17, B60T 8/1763

(54) **Verfahren und System zur Steuerung eines elektronischen Bremssystems**
Method and system for controlling an electronic braking system
Procédé et système de commande d'un système de freinage électronique

(30) Priorität: 27.09.2013 DE 102013016087
(43) Veröffentlichungstag der Anmeldung: 01.04.2015
(73) Patentinhaber: WABCO GmbH, 30453 Hannover (DE)
(72) Erfinder: Risse, Rainer, 30982 Pattensen-Reden (DE); Stender, Axel, 31787 Hameln (DE)

(56) Entgegenhaltungen:
- EP-A1- 0 425 810
- EP-A2- 0 475 010
- DE-A1-102008 054 476
- DE-A1-102011 112 422
- GB-A- 2 353 573
- US-A1- 2013 211 683

## Beschreibung

Die Erfindung betrifft ein Verfahren zur Steuerung eines elektronischen Bremssystems in einem Fahrzeug, insbesondere in einem Anhängefahrzeug, mit einer Antiblockierfunktion, wobei das Fahrzeug wenigstens einen Achslastsensor aufweist. Weiterhin betrifft die Erfindung ein elektronisches Bremssystem, ein Steuergerät zur Durchführung des Verfahrens und ein Fahrzeug mit elektronischem Bremssystem.

Nutzfahrzeuge mit pneumatischem Bremssystem weisen daneben ein elektronisches Bremssystem auf, dessen Steuergerät mit angeschlossenen Raddrehzahlsensoren eine Antiblockierfunktion steuert. Blockierende Räder können so wirksam verhindert werden. Bekannt ist auch die Verwendung von Sensoren zur Ermittlung der Achslast in Fahrzeugen mit elektronischem Bremssystem.

Die beschriebene Antiblockierfunktion ist zur Verkürzung eines Bremsweges geeignet bei der Fahrt auf festem, ebenem Untergrund. Im Gelände, d. h. auf unebenem, losem Untergrund führt die Antiblockierfunktion eher zu einem längeren Bremsweg. Bei unebenem, losem Untergrund kann ein Schlupf der Räder zu einem kürzerem Bremsweg verhelfen, da sich durch den Schlupf ein Keil aus Untergrundmaterial vor dem betreffenden Rad aufbaut. Es ist deshalb grundsätzlich bekannt, die Antiblockierfunktion bei Fahrten auf einem Untergrund, der nicht fest und eben ist, abzuschalten. Hierzu muss der Fahrer einen Schalter im Zugfahrzeug oder Anhängefahrzeug bedienen.

Für den Betrieb mit einem Schlepper gibt es Anhängefahrzeuge mit eigenem elektronischem Bremssystem und Antiblockierfunktion. Zur Deaktivierung der Antiblockierfunktion müsste der Fahrer einen Schalter manuell betätigen. Vergisst der Fahrer dies, kann es zu Bremswegverlängerungen kommen.

In der DE 10 2008 054 476 A1 erwähnt ist die Auswertung des Signals eines Längsneigungssensors. Ebenfalls offenbart ist eine Unterscheidung von weniger schwerem Gelände und schwerem Gelände mittels eines Sensors, der auch ein Längsbeschleunigungssensor sein kann.

Die GB 2 353 573 A offenbart ein Verfahren zur Regelung einer Bremsfunktion, bei dem ein Reibwert der Räder einer Hinterachse ermittelt und zur Modifizierung einer Radschlupfvariablen und eines Schwellwerts hierfür verwendet wird. Zusätzlich kann das Straßengefälle berücksichtigt werden. Dieses wird bestimmt aus einer Längsbeschleunigung, welche aus einer Geschwindigkeitsänderung abgeleitet wird.

EP 0 425 810 A1 offenbart ein spezielles Gelände-Bremsenbetätigungsprogramm mit größerem Radschlupf gegenüber der Straßenfunktion und als weitere Option ein zulässiges Blockieren der Räder, in Verbindung mit einer manuellen Auswahl des Geländeprogramms. Eine Detektion des Untergrunds findet nicht statt.
Aufgabe der vorliegenden Erfindung ist die automatische Erkennung einer Geländefahrt, so dass die Antiblockierfunktion ohne Eingriff des Fahrers aus dem Standardmodus in den Geländemodus wechseln kann.

Zur Lösung der Aufgabe weist das erfindungsgemäße Verfahren die Merkmale des Anspruchs 1 auf. Die Antiblockierfunktion arbeitet in wenigstens zwei verschiedenen Modi, nämlich in einem Standardmodus zumindest bei festem, ebenem Untergrund und in einem Geländemodus im Übrigen. Es werden Signale des Achslastsensors ausgewertet, um die Beschaffenheit des Untergrunds zu erkennen. Die Antiblockierfunktion schaltet in Abhängigkeit von den Signalen des Achslastsensors vom Standardmodus in den Geländemodus und umgekehrt, wobei die Antiblockierfunktion im Geländemodus einen größeren Schlupf zulässt als im Standardmodus. Signale eines Neigungssensors werden ausgewertet, um eine Talfahrt zu erkennen, und nach Erkennung einer Talfahrt schaltet die Antiblockierfunktion in einen verschärften Geländemodus, wobei die Antiblockierfunktion im verschärften Geländemodus einen größeren Schlupf zulässt als im Geländemodus.

Der Begriff "Achslastsensor" ist hier grundsätzlich im weitesten Sinne zu verstehen. Relevant sind alle Sensoren, die einen Druck oder Weg oder eine andere Größe aufnehmen können, die in einer Beziehung zur Achslast oder zur Änderung der Achslast auf unebenem Untergrund steht. Insbesondere handelt es sich um bekannte Achslastsensoren, beispielsweise einen Balgdrucksensor als Teil einer pneumatischen Federung, einen Drucksensor als Teil einer hydraulischen Federung oder einen Wegsensor als Teil einer mechanischen Federung.

Das Signal des Achslastsensors ist vom Untergrund abhängig. Amplitude und Frequenz auf glatter, fester Straße unterscheiden sich maßgeblich von Amplitude und Frequenz des Signals auf losem, ungleichmäßigem Untergrund. Eine Unterscheidung ist durch Mustererkennung leicht möglich.

Grundsätzlich soll die Antiblockierfunktion im Geländemodus lediglich einen etwas größeren Schlupf zulassen als im Standardmodus. Erfindungsgemäß ist aber auch ein Geländemodus mit extrem reduzierter Antiblockierfunktion, nämlich mit beliebigem Schlupf oder abgeschalteter Antiblockierfunktion.

Erfindungsgemäß können Signale eines Neigungssensors ausgewertet werden, um eine Talfahrt zu erkennen. Nach Erkennung der Talfahrt, insbesondere von 5% oder mehr Neigung, schaltet die Antiblockierfunktion in einen verschärften Geländemodus. In diesem verschärften Geländemodus lässt die Antiblockierfunktion einen größeren Schlupf zu als im Geländemodus. Vorzugsweise lässt die Antiblockierfunktion im verschärften Geländemodus beliebigen Schlupf zu oder die Antiblockierfunktion wird abgeschaltet.

Gegenstand der Erfindung ist auch ein elektronisches Bremssystem mit den Merkmalen des Anspruchs 5. Das System ist insbesondere für ein Anhängefahrzeug vorgesehen und weist eine Antiblockierfunktion und wenigstens einen Achslastsensor auf. Die Antiblockierfunktion weist wenigstens zwei verschiedenen Modi auf, nämlich einen Standardmodus für festen, ebenen Untergrund und einen Geländemodus. Die Signale des Achslastsensors sind auswertbar, um die Beschaffenheit des Untergrunds zu erkennen. Die Antiblockierfunktion schaltet in Abhängigkeit von den Signalen des Achslastsensors vom Standardmodus in den Geländemodus und umgekehrt, wobei die Antiblockierfunktion im Geländemodus einen größeren Schlupf zulässt als im Standardmodus. Signale eines Neigungssensors werden ausgewertet, um eine Talfahrt zu erkennen, und nach Erkennung einer Talfahrt schaltet die Antiblockierfunktion in einen verschärften Geländemodus, wobei die Antiblockierfunktion im verschärften Geländemodus einen größeren Schlupf zulässt als im Geländemodus.

Typischerweise enthält ein elektronisches Bremssystem für Fahrzeuge ein Steuergerät, in dem die erforderlichen Funktionen durch verdrahtete Bauteile oder durch Software realisiert sind. An das Steuergerät sind die für die Funktion wichtigen Sensoren angeschlossen. Im Hinblick auf die Antiblockierfunktion handelt es sich um Raddrehzahlsensoren. Zusätzlich kann der Achslastsensor an das Steuergerät angeschlossen sein.

Vorteilhafterweise ist der Achslastsensor ein in eine pneumatische oder hydraulische Federung integrierter Drucksensor, beispielsweise ein Balgdrucksensor in einer pneumatischen Federung. Sofern eine mechanische Federung im Fahrzeug vorhanden ist, kann der Achslastsensor darin integriert sein, beispielsweise ein Wegsensor. Schließlich kann der Achslastsensor auch ein von einer Federung unabhängiger, externer Sensor sein.

Erfindungsgemäß wertet das elektronische Bremssystem auch die Signale eines Neigungssensors für die Erkennung einer Talfahrt aus. Bei Erkennung der Talfahrt, insbesondere mit einer Neigung von 5% oder mehr, schaltet die Antiblockierfunktion in einen verschärften Geländemodus, wobei die Antiblockierfunktion im verschärften Geländemodus einen größeren Schlupf zulässt als im Geländemodus.

Vorteilhafterweise ist der Neigungssensor ein Längsbeschleunigungssensor. Je stärker das Fahrzeug in Fahrtrichtung abwärts geneigt ist, umso höhere Werte zeigt der Längsbeschleunigungssensor aufgrund der Erdbeschleunigung an.

Gegenstand der Erfindung ist auch ein Steuergerät zur Durchführung des Verfahrens nach einem der Ansprüche 1 bis 4. Das Steuergerät kann die in einem elektronischen Bremssystem üblichen Funktionen aufweisen und zur Durchführung des erfindungsgemäßen Verfahrens entsprechend programmiert sein und/oder geeignete Bauteile aufweisen.

Schließlich ist Gegenstand der Erfindung auch ein Fahrzeug mit einem System nach einem der Ansprüche 5 bis 10, insbesondere ein Anhängefahrzeug. Vorzugsweise ist das System in einem von einem Schlepper gezogenen Anhängefahrzeug installiert, insbesondere in einem Anhängefahrzeug, wie es in der Landwirtschaft, in der Forstwirtschaft oder speziell im Gelände eingesetzt wird.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:

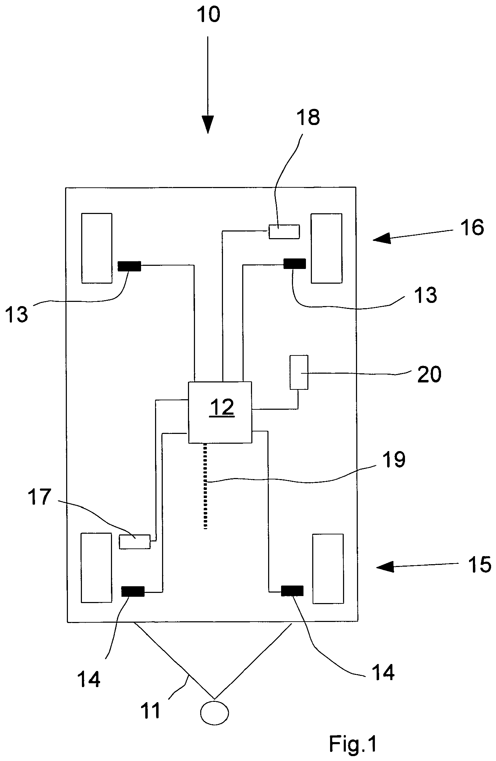

Figur 1 eine schematische Darstellung eines Anhängefahrzeugs mit elektronischem Bremssystem,
Figur 2 den Verlauf eines Achslastsignals bei Bewegung des Anhängefahrzeugs im Gelände,
Figur 3 den Verlauf des Achslastsignals bei Bewegung des Anhängefahrzeugs auf fester, ebener Straße.

Ein Anhängefahrzeug 10 mit Deichsel 11 weist nicht näher gezeigte pneumatische Bremsen in Verbindung mit einem elektronischen Bremssystem auf. Wesentlicher Bestandteil des Letzteren ist ein Steuergerät 12. Dieses empfängt Signale von Raddrehzahlsensoren 13, 14 an Rädern von Vorderachse 15 und Hinterachse 16 und regelt den Bremsdruck. Hierzu angesteuerte pneumatische Elemente sind nicht gezeigt. Das Steuergerät 12 regelt auch eine Antiblockierfunktion, mit der ein größerer Schlupf bzw. ein Blockieren der Räder beim Bremsen begrenzt oder vermieden werden soll.

Das Anhängefahrzeug 10 ist mit einer pneumatischen Federung versehen. In diese integriert sind zwei Balgdrucksensoren 17, 18, einer im Bereich der Hinterachse 16 und einer im Bereich der Vorderachse 15. Die Balgdrucksensoren übermitteln ihre Signale ebenfalls an das Steuergerät 12. Die Signale repräsentieren die jeweils wirksame Achslast. Entsprechend haben die Balgdrucksensoren 17, 18 hier die Funktion von Achslastsensoren.

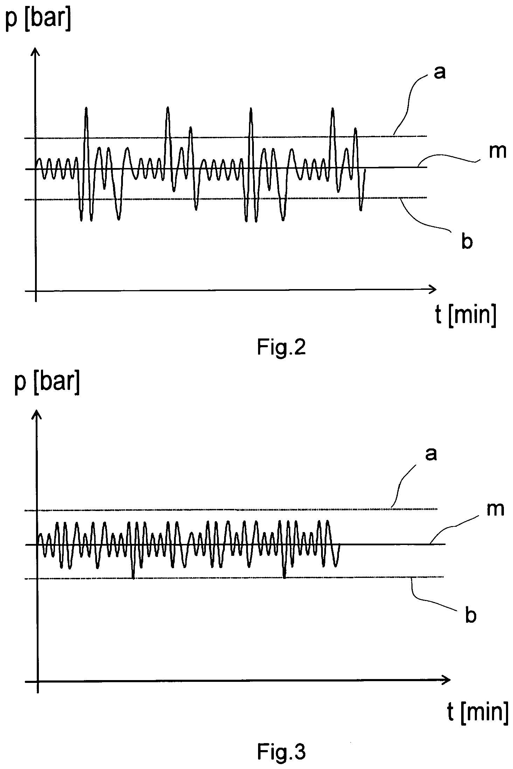

Das Steuergerät 12 weist eine genormte Schnittstelle 19 zum Anschluss an ein nicht gezeigtes Motorfahrzeug auf. Über die Schnittstelle 19 ist insbesondere eine Versorgung mit elektrischem Strom vorgesehen. Auch kann eine Datenverbindung integriert sein. Die Signale zumindest eines der Balgdrucksensoren 17, 18 werden im Steuergerät 12 ausgewertet und zur Steuerung der Antiblockierfunktion verarbeitet. Figur 3 zeigt die Signale des Balgdrucksensors 17 an der Vorderachse 15 bei Fahrt des Anhängefahrzeugs 10 auf einer befestigten Straße mit ebener Fahrbahn. Die Amplitude des Balgdrucksignals schwankt um einen Mittelwert m und innerhalb eines Korridors aus oberem Grenzwert a und unterem Grenzwert b. Bei diesem Signalverlauf bleibt die Antiblockierfunktion in einem Standardmodus. Vorzugsweise lässt die Antiblockierfunktion im Standardmodus nur geringen Schlupf oder keinen Schlupf der Räder zu.

Figur 2 zeigt den Signalverlauf für den Balgdrucksensor 17 bei Fahrt im Gelände, insbesondere auf unebenem, losem Untergrund. Die Amplitude des Balgdrucks schwankt wie in Figur 3 um den Mittelwert m. Im Zeitverlauf wird aber der obere Grenzwert a mehrfach überschritten. Ebenso wird der untere Grenzwert b mehrfach unterschritten. Mit geeigneter Software und/oder Hardware zählt das Steuergerät 12 die Überschreitungen und Unterschreitungen der Grenzwerte a, b pro Zeiteinheit. Sofern eine definierte Anzahl an Überschreitungen und Unterschreitungen pro Zeiteinheit überschritten wird, erkennt das Steuergerät 12 die Geländefahrt und schaltet die Antiblockierfunktion in einen Geländemodus. Im Geländemodus lässt die Antiblockierfunktion einen höheren Schlupf zu, im Extremfall einen beliebigen Schlupf. Dies entspricht einer abgeschalteten Antiblockierfunktion.

Bei höherem Schlupf bzw. abgeschalteter Antiblockierfunktion kann sich bei einer Vollbremsung im Gelände vor den Reifen ein Keil aus Untergrundmaterial aufbauen. Der Bremsweg ist dann kürzer als bei einer Vollbremsung im Gelände mit unbeschränkter Antiblockierfunktion.

Die Umschaltung von Standardmodus in Geländemodus erfolgt automatisch im Steuergerät 12. Der Fahrer der Zugmaschine muss nicht eingreifen. Die Umschaltung erfolgt beispielsweise bei mehr als 10 Über- und Unterschreitungen der Grenzwerte a und b pro Minute.

Das Umschalten vom Geländemodus in den Standardmodus erfolgt ebenfalls automatisch und in Abhängigkeit vom Signal des Balgdrucksensors 17. Beispielsweise wird umgeschaltet, sofern innerhalb der letzten Minute weniger als 5 Überschreitungen und Unterschreitungen der Grenzwerte a und b aufgetreten sind.

An das Steuergerät 12 angeschlossen ist noch ein Längsbeschleunigungssensor 20. Dieser misst die Längsbeschleunigung des Anhängefahrzeugs 10. Das Signal des Längsbeschleunigungssensors 20 kann auch als Maß für die Steigung der Fahrbahn oder des Untergrunds verwendet werden. Sobald das Anhängefahrzeug 10 auf einer Steigung talwärts oder bergwärts fährt, ist die Erdbeschleunigung für den Längsbeschleunigungssensor 20 detektierbar, abhängig vom Neigungswinkel. Anhand der Signale der Raddrehzahlsensoren 13, 14 kann die Beschleunigung in Längsrichtung des Anhängefahrzeugs 10 herausgerechnet werden.

Das Steuergerät 12 verwertet die Signale des Längsbeschleunigungssensors 20 derart, dass ab einer talwärts gerichteten Steigung von 3 % oder mehr, insbesondere von 5 % oder mehr (also bei Talfahrt), aus dem Geländemodus in einen verschärften Geländemodus der Antiblockierfunktion geschaltet wird. In diesem verschärften Geländemodus lässt die Antiblockierfunktion einen größeren Schlupf zu als im Geländemodus. Vorzugsweise wird die Antiblockierfunktion abgeschaltet. Die Umschaltung in den verschärften Geländemodus erfolgt nur, wenn bereits der Geländemodus eingeschaltet ist.

Das Anhängefahrzeug 10 ist vorzugsweise für den Betrieb mit einer landwirtschaftlichen oder forstwirtschaftlichen Zugmaschine und demnach zur Benutzung auch oder überwiegend abseits befestigter Straßen vorgesehen.

## Patentansprüche

1. Verfahren zur Steuerung eines elektronischen Bremssystems in einem Fahrzeug mit einer Antiblockierfunktion, insbesondere in einem Anhängefahrzeug (10), wobei das Fahrzeug wenigstens einen Achslastsensor (17, 18) aufweist, mit folgenden Merkmalen:
- die Antiblockierfunktion arbeitet in wenigstens zwei verschiedenen Modi, nämlich in einem Standardmodus zumindest bei festem, ebenem Untergrund und in einem Geländemodus im Übrigen,
- Signale des Achslastsensors (17, 18) werden ausgewertet, um die Beschaffenheit des Untergrunds zu erkennen,
- die Antiblockierfunktion schaltet in Abhängigkeit von den Signalen des Achslastsensors (17, 18) vom Standardmodus in den Geländemodus und umgekehrt, wobei die Antiblockierfunktion im Geländemodus einen größeren Schlupf zulässt als im Standardmodus,
- Signale eines Neigungssensors (20) werden ausgewertet, um eine Talfahrt zu erkennen, und nach Erkennung einer Talfahrt schaltet die Antiblockierfunktion in einen verschärften Geländemodus, wobei die Antiblockierfunktion im verschärften Geländemodus einen größeren Schlupf zulässt als im Geländemodus.

2. Verfahren nach Anspruch 1, **dadurch gekennzeichnet, dass** die Antiblockierfunktion im Geländemodus beliebigen Schlupf zulässt oder abgeschaltet wird.

3. Verfahren nach Anspruch 1, **dadurch gekennzeichnet, dass** nach Erkennung einer Talfahrt mit einer Neigung von 5% oder mehr die Antiblockierfunktion in den verschärften Geländemodus schaltet.

4. Verfahren nach Anspruch 3, **dadurch gekennzeichnet, dass** die Antiblockierfunktion im verschärften Geländemodus beliebigen Schlupf zulässt oder abgeschaltet wird.

5. Elektronisches Bremssystem, insbesondere für ein Anhängefahrzeug (10), mit einer Antiblockierfunktion und wenigstens einem Achslastsensor (17, 18), mit folgenden Merkmalen:
- die Antiblockierfunktion weist wenigstens zwei verschiedene Modi auf, nämlich einen Standardmodus zumindest für festen, ebenen Untergrund und einen Geländemodus im Übrigen,
- Signale des Achslastsensors (17, 18) sind auswertbar, um die Beschaffenheit des Untergrunds zu erkennen,
- die Antiblockierfunktion schaltet in Abhängigkeit von den Signalen des Achslastsensors (17, 18) vom Standardmodus in den Geländemodus und umgekehrt, wobei die Antiblockierfunktion im Geländemodus einen größeren Schlupf zulässt als im Standardmodus,
- Signale eines Neigungssensors (20) werden für die Erkennung einer Talfahrt ausgewertet, und nach Erkennung einer Talfahrt schaltet die Antiblockierfunktion in einen verschärften Geländemodus, wobei die Antiblockierfunktion im verschärften Geländemodus einen größeren Schlupf zulässt als im Geländemodus.

6. System nach Anspruch 5, **dadurch gekennzeichnet, dass** der Achslastsensor ein in eine pneumatische oder hydraulische Federung integrierter Drucksensor (17,18) ist.

7. System nach Anspruch 5, **dadurch gekennzeichnet, dass** der Achslastsensor ein in eine mechanische Federung integrierter Sensor ist, insbesondere ein Wegsensor.

8. System nach Anspruch 5, **dadurch gekennzeichnet, dass** der Achslastsensor ein von einer Federung unabhängiger, externer Sensor ist.

9. System nach Anspruch 5 oder einem der weiteren Ansprüche 6 bis 8, **dadurch gekennzeichnet, dass** nach Erkennung einer Talfahrt mit einer Neigung von 5% oder mehr die Antiblockierfunktion in den verschärften Geländemodus schaltet.

10. System nach Anspruch 9, **dadurch gekennzeichnet, dass** der Neigungssensor ein Längsbeschleunigungssensor (20) ist.

11. Steuergerät zur Durchführung des Verfahrens nach einem der Ansprüche 1 bis 4.

12. Fahrzeug mit einem System nach einem der Ansprüche 5 bis 10, insbesondere Anhängefahrzeug (10).

## Claims

1. Method for controlling an electronic braking system in a vehicle with an anti-lock braking function, in particular in a trailer vehicle (10), the vehicle having at least one axle load sensor (17, 18), with the following features:
- the anti-lock braking function operates in at least two different modes, namely in a standard mode at least in the case of a firm, flat underlying surface and otherwise in an off-road mode,
- signals of the axle load sensor (17, 18) are evaluated, in order to detect the condition of the underlying surface,
- the anti-lock braking function switches from the standard mode into the off-road mode and vice versa in a manner which is dependent on the signals of the axle load sensor (17, 18), the anti-lock braking function permitting a greater slip in the off-road mode than in the standard mode,
- signals of an inclinometer (20) are evaluated for the detection of a descent, and the anti-lock braking function switches into an enhanced off-road mode after detection of a descent, the anti-lock braking function permitting a greater slip in the enhanced off-road mode than in the off-road mode.

2. Method according to Claim 1, **characterized in that** the anti-lock braking function permits any desired slip or is switched off in the off-road mode.

3. Method according to Claim 1, **characterized in that** the anti-lock braking function switches into the enhanced off-road mode after detection of a descent with a gradient of 5% or more.

4. Method according to Claim 3, **characterized in that** the anti-lock braking function permits any desired slip or is switched off in the enhanced off-road mode.

5. Electronic braking system, in particular for a trailer vehicle (10), with an anti-lock braking function and at least one axle load sensor (17, 18), with the following features:
- the anti-lock braking function has at least two different modes, namely a standard mode at least for a firm, flat underlying surface and otherwise an off-road mode,
- signals of the axle load sensor (17, 18) can be evaluated, in order to detect the condition of the underlying surface,
- the anti-lock braking function switches from the standard mode into the off-road mode and vice versa in a manner which is dependent on the signals of the axle load sensor (17, 18), the anti-lock braking function permitting a greater slip in the off-road mode than in the standard mode,
- signals of an inclinometer (20) are evaluated for the detection of a descent, and the anti-lock braking function switches into an enhanced off-road mode after detection of a descent, the anti-lock braking function permitting a greater slip in the enhanced off-road mode than in the off-road mode.

6. System according to Claim 5, **characterized in that** the axle load sensor is a pressure sensor (17, 18) which is integrated into a pneumatic or hydraulic suspension system.

7. System according to Claim 5, **characterized in that** the axle load sensor is a sensor which is integrated into a mechanical suspension system, in particular a displacement sensor.

8. System according to Claim 5, **characterized in that** the axle load sensor is an external sensor which is separate from a suspension system.

9. System according to Claim 5 or one of the further Claims 6 to 8, **characterized in that** the anti-lock braking function switches into the enhanced off-road mode after detection of a descent with a gradient of 5% or more.

10. System according to Claim 9, **characterized in that** the inclinometer is a longitudinal acceleration sensor (20).

11. Control unit for carrying out the method according to one of Claims 1 to 4.

12. Vehicle having a system according to one of Claims 5 to 10, in particular a trailer vehicle (10).

## Revendications

1. Procédé de commande d'un système électronique de freinage à fonction anti-blocage, en particulier pour un véhicule remorqué (10), le véhicule présentant au moins un capteur (17, 18) de charge à l'essieu, le procédé présentant les caractéristiques suivantes :
- la fonction anti-blocage travaille en au moins deux modes différents, à savoir un mode standard utilisé au moins sur sol ferme et plan et pour le reste un mode tout-terrain,
- des signaux du capteur (17, 18) de charge à l'essieu sont évalués pour détecter la nature du sol,
- la fonction anti-blocage bascule selon les signaux du capteur (17, 18) de charge à l'essieu du mode standard au mode tout-terrain et inversement, la fonction anti-blocage admettant en mode tout-terrain un patinage plus important qu'en mode standard,
- des signaux du capteur d'inclinaison (20) sont évalués pour détecter un déplacement en pente et après qu'un déplacement en pente a été détecté, la fonction anti-blocage bascule en un mode tout-terrain renforcé, la fonction anti-blocage admettant en mode tout-terrain renforcé un patinage plus important d'en mode tout-terrain.

2. Procédé selon la revendication 1, **caractérisé en ce qu'**en mode tout-terrain, la fonction anti-blocage admet un patinage quelconque ou est débranchée.

3. Procédé selon la revendication 1, **caractérisé en ce qu'**après la détection d'un déplacement en pente sur une pente de 5 % ou plus, la fonction anti-blocage bascule en mode tout-terrain renforcé.

4. Procédé selon la revendication 3, **caractérisé en ce qu'**en mode tout-terrain renforcé, la fonction anti-blocage admet un patinage quelconque ou est débranchée.

5. Système électronique de freinage, en particulier pour un véhicule remorqué (10), avec une fonction anti-blocage et au moins un capteur (17, 18) de charge à l'essieu, le système présentant les caractéristiques suivantes :
- la fonction anti-blocage travaille en au moins deux modes différents, à savoir un mode standard utilisé au moins sur sol ferme et plan et pour le reste un mode tout-terrain,
- des signaux du capteur (17, 18) de charge à l'essieu peuvent être évalués pour détecter la nature du sol,
- la fonction anti-blocage bascule selon les signaux du capteur (17, 18) de charge à l'essieu du mode standard au mode tout-terrain et inversement, la fonction anti-blocage admettant en mode tout-terrain un patinage plus important qu'en mode standard,
- des signaux du capteur d'inclinaison (20) sont évalués pour détecter un déplacement en pente et après qu'un déplacement en pente a été détecté, la fonction anti-blocage bascule en un mode tout-terrain renforcé, la fonction anti-blocage admettant en mode tout-terrain renforcé un patinage plus important d'en mode tout-terrain.

6. Système selon la revendication 5, **caractérisé en ce que** le capteur de charge à l'essieu est un capteur (17, 18) de pression intégré dans une suspension pneumatique ou hydraulique.

7. Système selon la revendication 5, **caractérisé en ce que** le capteur de charge à l'essieu est un capteur intégré dans une suspension mécanique, en particulier un capteur de déplacement.

8. Système selon la revendication 5, **caractérisé en ce que** le capteur de charge à l'essieu est un capteur externe indépendant d'une suspension.

9. Système selon la revendication 5 ou l'une des autres revendications 6 à 8, **caractérisé en ce qu'**après la détection d'un déplacement en pente sur une pente de 5 % ou plus, la fonction anti-blocage bascule en mode tout-terrain renforcé.

10. Système selon la revendication 9, **caractérisé en ce que** le capteur d'inclinaison est un capteur (20) d'accélération longitudinale.

11. Appareil de commande permettant de mettre en oeuvre un procédé selon l'une des revendications 1 à 4.

12. Véhicule doté d'un système selon l'une des revendications 5 à 10, en particulier véhicule remorqué (10).
